(19) Europäisches Patentamt / European Patent Office / Office européen des brevets

(11) **EP 3 417 409 B1**

(12) **EUROPEAN PATENT SPECIFICATION**

(45) Date of publication and mention
of the grant of the patent:
**07.06.2023 Bulletin 2023/23**

(21) Application number: **17742535.2**

(22) Date of filing: **09.06.2017**

(51) International Patent Classification (IPC):
***G06Q 10/10*** (2023.01) ***G06Q 50/18*** (2012.01)
***G06F 16/93*** (2019.01)

(52) Cooperative Patent Classification (CPC):
**G06Q 50/18; G06F 16/93; G06Q 10/10;**
G06N 20/00

(86) International application number:
**PCT/IB2017/000797**

(87) International publication number:
**WO 2017/216627 (21.12.2017 Gazette 2017/51)**

(54) **SCENARIO ANALYTICS SYSTEM**

SZENARIOANALYSESYSTEM

SYSTÈME D'ANALYSE DE SCÉNARIOS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2016 US 201662350754 P**

(43) Date of publication of application:
**26.12.2018 Bulletin 2018/52**

(73) Proprietor: **Thomson Reuters Enterprise Centre
GmbH
6300 Zug (CH)**

(72) Inventors:
• **CONRAD, Jack, G.**
**Eagan**
**MN 55123 (US)**
• **AL-KOFAHI, Khalid**
**Rosemount**
**MN 55068 (US)**

(74) Representative: **IPrime Rentsch Kaelin AG
Hirschengraben 1
8001 Zürich (CH)**

(56) References cited:
**US-A1- 2007 038 625    US-A1- 2009 076 836**

## Description

### Copyright Notice

### Cross-Reference to Related Application

This application claims priority to U.S. Provisional Application No. 62/350,754, filed June 16, 2016, entitled "SCENARIO ANALYTICS".

### Technical Field

This disclosure relates to evaluation of scenarios, their merits and their consequences, and more particularly methods and systems for generating prospective legal strategies.

### Background

A significant proportion of what knowledge workers do, including attorneys, can be described as falling under one of three tasks: finding information, analyzing information and deciding information. Legal information providers like THOMSON REUTERS ™, provide information to facilitate these tasks. For example, indices and citator databases are intended to help with the 'finding task. Case summaries, the key number system and analytical material are designed to help legal practitioners with the 'analyzing' and 'finding' tasks, while practice guides are designed to help attorneys with the 'deciding' task. However, most legal information provider applications focus on the 'finding' task, while the 'analyzing' and 'deciding' tasks requires extensive attorney or user involvement. Generally, the analyzing and deciding tasks are currently performed manually or semi-manually in a laborious and inconsistent manner. Many attorneys rely on their trial-based experiences to formulate an assessment of the prospects of various litigation strategies, which can be biased and error prone.

US 2009/076836 A1 relates to an online legal research system that allows users to generate a report interface that summarizes key pieces of information, such as verdict information, and also enables access to related trending and statistical information as well as additional litigation, analytical, and ex-pert materials. The exemplary system generates a dynamic verdict report based on parameters selected from a query-definition template having an embedded taxonomy.

Accordingly, there is a need for improved systems and techniques that enable an attorney to thoroughly examine the landscape of a case and formulate a legal strategy.

### Summary

The invention is set out in the appended set of claims.

Systems, technologies and techniques for generating prospective legal strategies are disclosed. The system and technologies, such as THOMSON REUTERS SCENARIO ANALYTICS ™, employ data mining, natural language processing and machine learning approaches to generate prospective legal strategies. The system and technologies analyze given case facts (i.e., background facts, event types such as accident, injury, malpractice, discrimination) and provide a rich set of insights that assist in formulating effective legal arguments and strategies.

While there are attempts to utilize data-driven decision support processes, the present disclosure differs in that it does not focus on providing summary statistics, for example on how judges ruled on certain motions, but focuses on unearthing deeper patterns in the data.

The system identifies and harnesses the underlying fact patterns in a case and compares them with similar fact patterns in prior cases stored in a large legal database. The database can include hundreds of thousands of jury verdict cases. The system generates a set of potential outcomes based on pools of editorially annotated data about similar cases that utilize similar arguments and a set of related characteristics (trial strategies, trial arguments, trial lengths, award asks, award assignments, etc.).

Various aspects of the system relate to generating prospective legal strategies. For example, according to one aspect, the system includes a legal data store comprising a set of cases and corresponding case summaries, and a scenario analytics server including a processor and memory storing instructions that, in response to receiving an input from at least one data source, causes the processor to apply a set of process modules to the input to generate an input summary. The input summary includes a set of identified concepts and corresponding attributes of the input. The input includes background facts and causes the processor to select one or more cases from the legal data store based in part on the case summaries and input summary. The system analyzes the one or more selected cases from the legal data store, and generates one or more legal strategies using the analysis of the one or more selected cases.

In one implementation, the input can also include one or more plaintiff claim or defendant claim. In another implementation, one of the set of process modules parses out the unstructured text fields of the input. In yet another implementation, one of the set of process modules classifies the input into a predefined taxonomy.

In a further implementation, selection of one or more cases from a verdict data store comprises clustering cases to extract a set of characteristic properties. The set of characteristic properties may be but are not limited to noun phrases, mean length of time for each case to complete, the shortest or longest duration case, the mean award value for the clustered cases, and the lowest and highest awards.

The legal data store may comprise a Jury Verdict and Settlements data store, wherein the set of cases of the legal data store are segmented into at least one of background facts, plaintiff claims or defendant claims.

In one implementation, a negligence module is provided that applies a negligence analysis to the set of cases of the legal data store, wherein negligence analysis comprises in part of determining negligence by the plaintiff or defendant based on jurisdiction .

In another implementation, a time factorization module is provided that applies temporal analysis to the set of cases of the legal data store, wherein temporal analysis comprises at least one of identifying the jurisdiction of a case or mean duration of a case.

The resulting one or more legal strategies may be presented on a graphical user interface.

Advantageously, the present application allows a user to choose the most advantageous strategy for them and their clients by allowing the user to instantaneously examine the effect of different strategies have had on outcomes and the associated award. Users may also explore the impact that different claims or combinations claims may have on the expected outcome of the case dynamically.

The present disclosure is distinct from existing technologies as it integrates relevant, large scale content, dedicated technological capabilities of both staff and know-how, and in-house subject matter expertise (such as, THOMSON REUTERS® editors and their expert annotation and summarization skills) to provide insights, decision-making assistance capabilities and predictive capabilities that are generally unavailable in the domain.

Additional features and advantages will be readily apparent from the following detailed description, the accompanying drawings and the claims.

## Brief Description of the Drawings

Fig. 1 is an exemplary architectural diagram of the system;
Fig. 2 is an exemplary flow chart of one implementation of the disclosure;
Fig. 3 is an exemplary flow chart of another implementation of the disclosure;
Figs. 4-6 illustrates the exemplary graphical user interface (GUI) of the disclosure;
Figs. 7a and 7b illustrates exemplary unstructured textual descriptions; and
Figs. 8a and 8b illustrates exemplary award distributions.

## Detailed Description

In the following description, reference is made to the accompanying drawings that form a part hereof, and in which is shown by way of illustration specific implementations in which the disclosure may be practiced. It is to be understood that other implementations may be utilized and structural changes may be made without departing from the scope of the present disclosure.

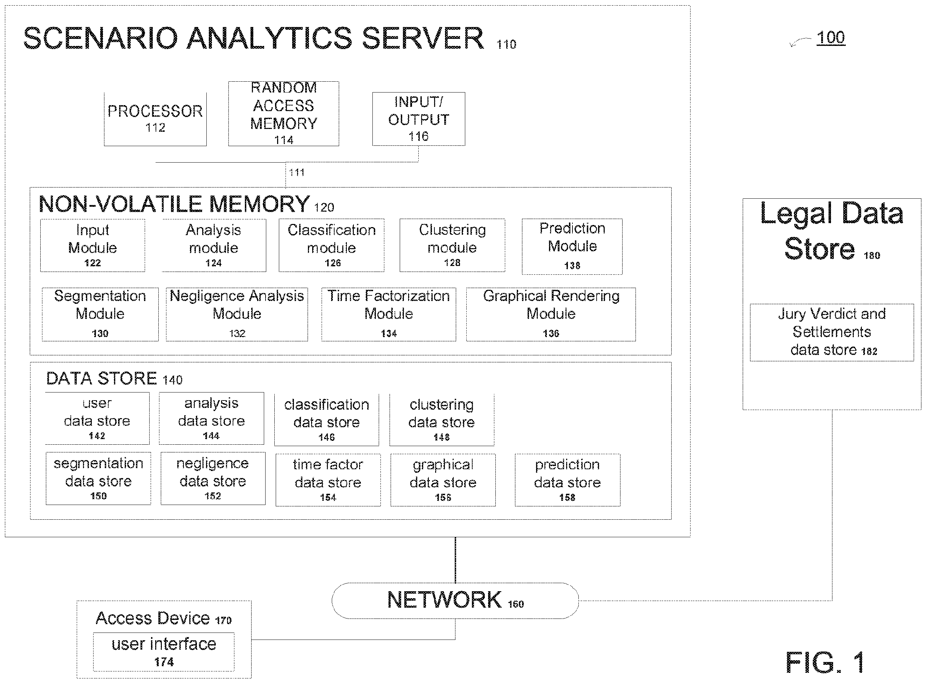

Fig. 1 shows an exemplary system 100 for analyzing a scenario and generating prospective strategies. As shown in Fig.1, in one implementation, the system 100 is configured to include an access device 170 that is in communication with a scenario analytics server 110 over a network 160. Access device 170 can include a personal computer, laptop computer, or other type of electronic device, such as a mobile phone, smart phone, tablet, PDA or PDA phone. In one implementation, for example, the access device 170 is coupled to I/O devices (not shown) that include a keyboard in combination with a point device such as a mouse for sending a request to the scenario analytics server 110. Preferably, memory (not shown) of the access device 170 is configured to include a user interface 174 that is used to request and receive information from scenario analytics server 110. In one implementation, the user interface 174 may be part of a web browser (not shown), which allows a user to access and retrieve information from the scenario analytics server 110. Communication between the user interface 174 of the access device 170 and scenario analytics server 110 may utilize one or more networking protocols, which may include HTTP, HTTPS, RTSP, or RTMP. Although one access device 170 is shown in Fig. 1, the system 100 can support one or multiple access devices.

The network 160 can include various devices such as routers, servers, and switching elements connected in an Intranet, Extranet or Internet configuration. In some implementations, the network 160 uses wired communications to transfer information between the access device 170 and scenario analytics server 110. In another implementation, the network 160 employs wireless communication protocols. In yet other implementations, the network 160 employs a combination of wired and wireless technologies.

As shown in Fig. 1, in one implementation, the scenario analytics server 110, may be a special purpose server, and preferably includes a processor 112, such as a central processing unit ('CPU'), random access memory ('RAM') 114, input-output devices 116, such as a display device (not shown), and non-volatile memory 120, all of which are interconnect via a common bus 111 and controlled by the processor 112.

In one implementation, the non-volatile memory 120 is configured to include an input module 122, an analysis module 124, a classification module 126, a clustering module 128, a segmentation module 130, a negligence analysis module 132, a time factorization module 134, a graphical rendering module 136 and a prediction module 138.

The input module 122 receives the user's data from the user interface 174 on the user's access device 170. Received user data, from the user interface 174 may be but is not limited to data in one or more unstructured text fields, unstructured or structured textual description, a string of data, and may contain information such as facts of a case or other relevant information. As used herein, the phrase 'received user data' is used interchangeably with input data, user's data or user's input. In one implementation, the user's data is transferred through network 160 from the user interface 174 to the scenario analytics server 110. In a further implementation, the user's data may be stored in user data store 142. In another implementation, the user's input may also be stored locally (not shown) on the user's access device 170 or externally in a data store (not shown).

The analysis module 124 processes data received by input module 122. In one implementation, the analysis module 124 may process the user's input by parsing out the one or more unstructured text fields. In a further implementation, analysis of the user's input may also comprise sentence analysis following the application of the segmentation module. In another implementation, the analysis module 124 retrieves cases from a legal data store 180 or a Jury Verdict and Settlements data store 182 for further processing by modules 126, 128, 130, 132, 134 and 136. The analyzed data may be stored in analysis data store 144.

The classification module 126 classifies the facts of the user's input in a similar manner as others in similar situations. In another implementation, the classification module 126 classifies facts of cases from the legal data store 180 (i.e., a repository of jury verdicts and settlements cases, Jury Verdict and Settlements data store 182). The information may be classified using a classification engine like CaRE ™. CaRE ™ may be trained on a legal corpus such as WEST CENTRAL HEADNOTE ™ database, in order to categorize a case according to a highly granular legal taxonomy. An exemplary highly granular legal taxonomy is WEST KEY NUMBER SYSTEM®. An exemplary classification engine from U.S. Patent No. 7,062,498 entitled "Systems, methods, and software for classifying text from judicial opinions and other documents" and U.S. Patent No. 7,580,939, entitled "Systems, methods, and software for classifying text from judicial opinions and other documents" is known. The classification module 126 may "roll up" a few levels of classification in order to produce a less granular, slightly broader assignment category for the given textual description. The classification process permits the system to compare and examine the instant case with similar cases in the Jury Verdict and Settlements data store 182. The classified data may then be stored in classification data store 146.

The clustering module 128 recognizes common elements across cases, distinguishes and groups them into separate and distinct clusters. The clustering module 128 may store the resulting cluster in clustering data store 148.

The segmentation module 130 parses sentences and/or the text in one or more cases and segment the information into, but not limited to, background facts, the plaintiff claims and defendant claims.

The negligence analysis module 132 generates a negligence model or weights negligence in a correlation analysis of awards (or verdict) in one or more cases. In another implementation, jurisdiction of the case and/or plaintiff's negligence contributes to the analysis.

The time factorization module 134 analyzes time and its influence to the overall assessment of positive versus negative outcomes in one or more cases.

The graphical rendering module 136 generates a graphical representation of award distributions based on the analysis generated by the scenario analytics server's 110 modules 124, 126, 128, 130, 132, 134 and 138.

The prediction module 138 compiles the analysis generated by the one or more scenario analytics server's 110 modules 124, 126, 128, 130, 132, 134 and 136 and generates a prediction output or a forecast for a given scenario. In one implementation, the prediction output may comprise one or more prediction models generated by modeling of the underlying data and may be associated with prediction scores. In another implementation, the prediction output or forecast may comprise one or more strategies for a given situation or for a scenario that has been defined by the user's input. In a further implementation, the prediction output or forecast may be presented on a graphical user interface.

As shown in the exemplary Fig. 1, a data store 140 is provided that is utilized by one or more of the software modules 122, 124, 126, 128, 130, 132, 134, 136 and 138 to access and store information relating to the creation of a prediction output or processing of the cases in the legal data store 180, such as the Jury Verdict and Settlements data store 182. In one implementation, the data store 140 is a relational database. In another implementation, the data store 140 is a file server. In yet other implementations, the data store 140 is a configured area in the non-volatile memory 120 of the scenario analytics server 110. Although the data store 140 shown in Fig. 1 is part of the scenario analytics server 110, it will be appreciated by one skilled in the art that the data store 140 can be distributed across various servers and be accessible to the scenario analytics server 110 over the network 160.

As shown in Fig. 1, in one implementation, the data store 140 is configured to include a user data store 142, an analysis data store 144, a classification data store 146, a clustering data store 148, a segmentation data store 150, a negligence data store 152, a time factor data store 154, a graphical data store 156 and a prediction data store 158.

The user data store 142 includes data (i.e., user's input) received by input module 122.

The analysis data store 144 includes the analysis of the user's input that has been processed by analysis module 124.

The classification data store 146 includes determined facts of the user's input received by input module 122 that have been processed by the classification module 126. The classification data store 146 may also include the determined facts of data from the legal data store 180 such as the Jury Verdict and Settlements data store 182. In one implementation, the determined facts may include categorization or topic classification by classification module 126. In another implementation, the determined facts of the data may be represented using the KEY NUMBER SYSTEM™.

The clustering data store 148 includes the determined facts of data that have been organized by the classification module 126 and processed by the clustering module 128 to differentiate one set from another based on the underlying claims categorization, classification, principles or strategies.

The segmentation data store 150 includes the parsing and segmentation of the data in the legal data store 180 (i.e., cases in the Jury Verdict and Settlements data store 182) as determined by segmentation module 130. In one implementation, the determined segments may be related to the facts, the plaintiffs' claims and defendants' claims. In a further implementation, the determined segments may be recorded in the segmentation data store 150 as separate fields.

The negligence data store 152 includes the analysis of the data in the legal data store 180 (i.e., cases in the Jury Verdict and Settlements data store 182) by negligence analysis module 132. In another implementation, the negligence data store 152 also includes the negligence model or the correlation analysis as determined by the negligence analysis module 132.

The time factor data store 154 includes the assessments determined by the time factorization module 134. Exemplary time assessments may include but are not limited to the time to process a case for a certain jurisdiction or mean duration for a case according to an identified legal strategy, or time in relation to the outcome or award rendered for a case.

The graphical data store 156 includes the generated graphical representation of award distributions as determined by the graphical rendering module 136. An exemplary graphical representation may be in the form of a bar graph illustrating the award levels against proposed options or predictions. In another implementation, the graph may be dynamically calculated based on clustered data.

The prediction data store 158 includes on a diverse set of features and its related analysis as determined by prediction module 138. In one implementation, the prediction data store 158 may include one or more features originating from the facts and claims sections of cases stored in the Jury Verdicts and Settlements data store 182.

In a further implementation, as shown in Fig. 1, the legal data store 180 includes a processor (not shown), random access memory (not shown) and non-volatile memory (not shown) which are interconnected via a common bus and controlled by the processor. In one implementation, the data in legal data store 180 may contain a Jury Verdict and Settlements data store 182 which may be communicated through network 160 and utilized by the scenario analytics server 110. In another implementation, the Jury Verdict and Settlements data store 182 contains a repository of cases or records with information about the duration of each case, concept lists representing events like accidents, resulting torts like injuries and other litigation or legal topics, the claims made by the plaintiff, and the claims made by the defendant. In a further implementation, the Jury Verdict and Settlements data store 182 may also contain a knowledge base of vocabularies and concept lists.

It should be noted that the system 100 shown in Fig. 1 is one implementation of the disclosure. Other system implementations of the disclosure may include additional structures that are not shown, such as secondary storage and additional computational devices. In addition, various other implementations of the disclosure include fewer structures than those shown in Fig. 1.

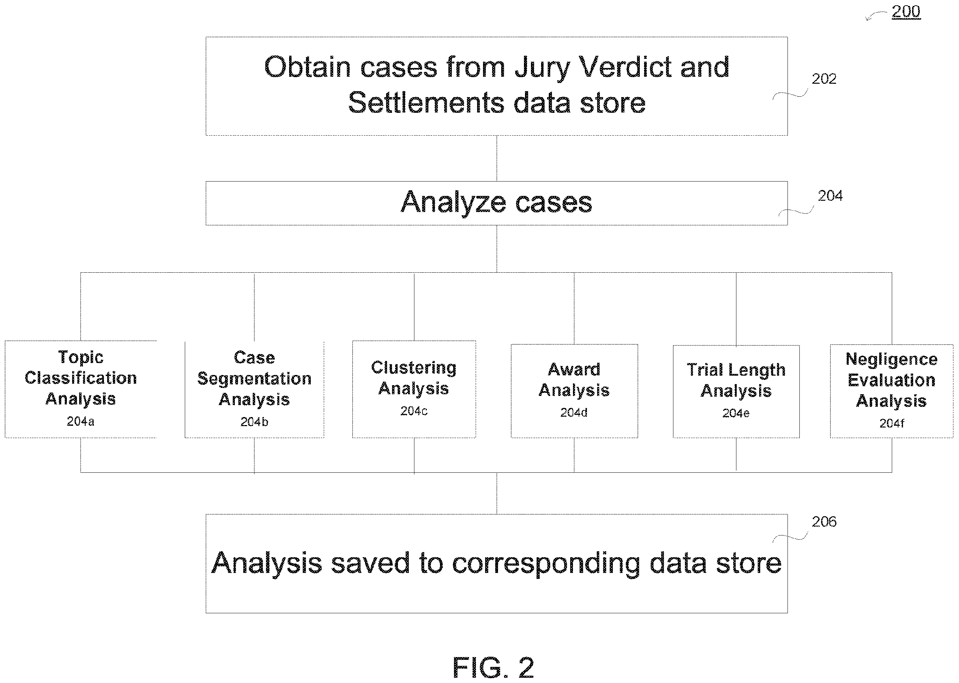

Referring now to Fig. 2, an exemplary method 200 for processing of the cases in the Jury Verdict and Settlements data store 182 is disclosed.

Starting at step 202, the analysis module 124 retrieves cases from the Jury Verdict and Settlements data store 182 for processing. In one implementation, the Jury Verdict and Settlements data store 182 includes a set of cases, records or case summaries, covering a diverse set of litigation categories and comprises of short paragraphs for free text, with some editorial guidelines. Such a repository allows for identification, organization and analysis of underlying fact patterns and legal strategies used for similar cases and to determine which strategies have been more effective and which were less effective.

In another implementation, an exemplary Jury Verdict and Settlements data store 182 may be THOMSON REUTERS LRP™, which consists of roughly 400,000 cases or records, covers 50 states and a wide variety of legal topics, such as but are not limited to premises liability, medical malpractice and employment discrimination, as well as award ranges.

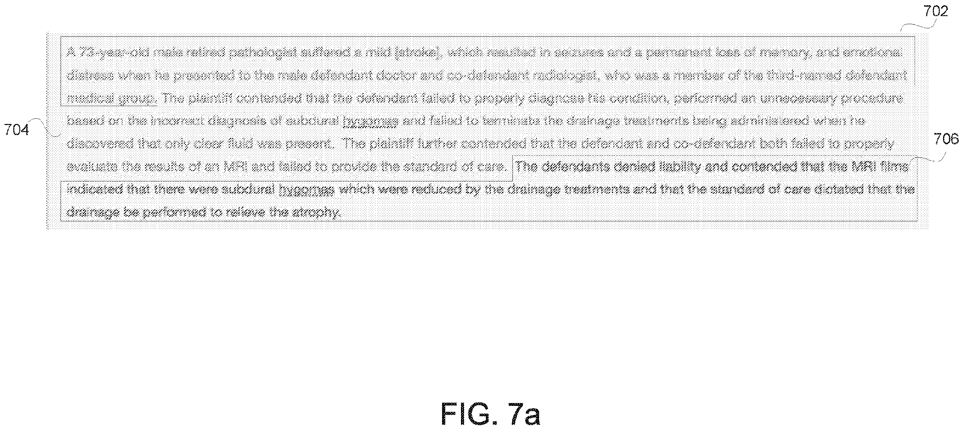

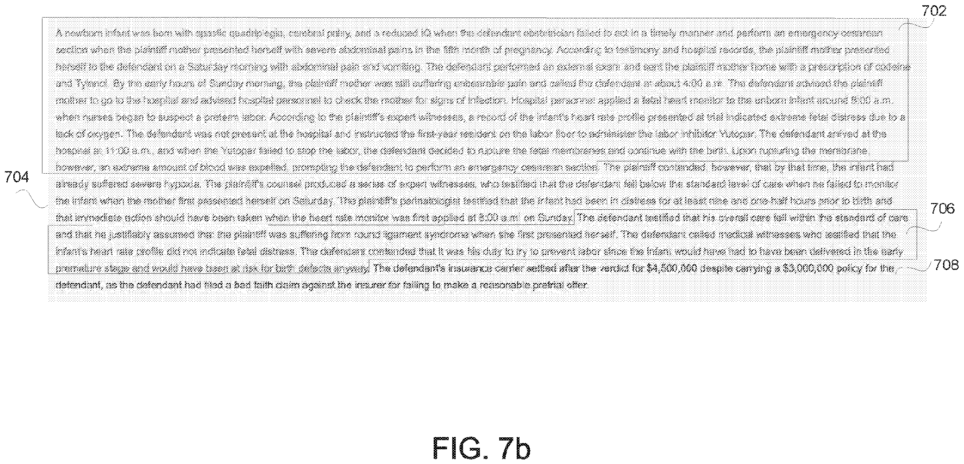

There may be a predetermined number of fields, such as 25 fields, of case-related information in each Jury Verdict and Settlements data store 182 record. The fields describe the scenario or the case, and may include but are not limited to a section containing the seminal facts of the event, noun phrases, identified concepts, the entities involved, the plaintiffs' claims and the defendants' claims, which may be in the form of unstructured textual descriptions and are produced using a standard, semi-closed vocabulary in describing the facts and claims of a case to ensure consistency. These unstructured textual summaries may accompany a set of metadata comprising in part: State Jurisdiction; Court; General Description of Event/Accident; Specific Description of Event/Accident; Primary Injury; Secondary Injury; Case Type (Liability / Other (e.g., Discrim.)) Examples of the unstructured textual description are shown in Figures 7a and 7b.

In yet a further implementation, the records of the Jury Verdict and Settlements data store 182 may also contain a wide variety of informative fields such as but not limited to: date of activity (accident, filing, trial or settlement); event-type (rear-end collision, sexual harassment, ...); docket no.; jurisdiction (county, state, court); case-type (liability, discrimination, malpractice ...); description (general and specific); injury type (primary, secondary ...); award (award category, award range, exact award); damage summary (plaintiff profile); unstructured textual description, including fact paragraph, plaintiff claims, defendant claims, and/or other information.

Continuing onto step 204, the cases are then analyzed by modules 126, 128, 130, 132, 134 and 136. The types of analysis include but are not limited to topic classification analysis 204a, case segmentation analysis 204b, clustering analysis 204c, award analysis 204d, trial length analysis 204e, and negligence evaluation analysis 204f.

The classification module 126 performs topic classification analysis 204a which classifies the cases in the Jury Verdict and Settlements data store 182 along topical lines and may be but not limited to finer-grained topical lines than those covered by the associated metadata. In one implementation, the classification module 126 may utilize the WEST KEY NUMBER SYSTEM® to classify the descriptions of the facts, the plaintiff claims and/or defendant claims. The WEST KEY NUMBER SYSTEM® (or KEY NUMBER SYSTEM™) represents a legal taxonomy consisting of approximately 100,000 leaf nodes and 200,000 total nodes. The depth of the taxonomic tree may range from 3 to 11, with the average depth being about 6. In another implementation, classification module 126 may utilize a key number assigner classification tool that has been trained on the order of 10 million documents (e.g., O(10M)) editorially produced and WEST KEY NUMBER SYSTEM® classified points of law (a.k.a. headnotes).

The segmentation module 130 performs Case Segmentation Analysis 204b which parses or segments the record or cases in the Jury Verdict and Settlements data store 182. In one implementation, the segmentation module 130 may segment the record based on but not limited to background facts, plaintiff claims, defendant claims and remaining case details as separate fields. In a further implementation, the segmentation module 130 may utilize python, java, scala programming language or the like for segmenting.

The clustering module 128 performs Clustering Analysis 204c which groups similar scenarios or cases in the Jury Verdict and Settlements data store 182. The clustering module 128 may differentiate one set of cases from another based on categorization, classification, principles or strategies.

The clustering module 128 may apply a $k$- means clustering algorithm over the plaintiff claims for values of $k$ in the low single digits. K-means clustering algorithm may partition n data objects or documents into k clusters in which each data object or document belongs to the cluster with the nearest mean or center point. For example, values of $3 \leq K \leq 6$ however, values of k can vary depending on litigation type and underlying fact pattern. In a further implementation, the NLTK 3.0 toolkit was used to conduct the clustering.

The clustering module 128 may compute a metric to distinguish one set of clustered plaintiff claims from another in terms of utility (i.e., differentiating those that have been more effective from those that have been less effective). The metric is computed based on the award behavior for a given cluster and may be referred to as the 'award_quotient', which is the ratio of a cluster's (or cases) with non-zero awards to its zero awards:

$$\text{Award\_quotient} = \frac{\text{cases with non zero award}}{\text{cases with zero award}}$$

This metric allows the determination of a cluster that has a high degree of awards. In one implementation, an award_quotient of ≥ 2.5 is used as a threshold for clustering.. As award quotient of ≥ 2.5 may be a noteworthy threshold for a cluster of distinction and worthy of added scrutiny.

In yet another implementation, the clustering module 128 uses the average length in tokens (i.e., the count of words) in the plaintiff's claim(s) to differentiate one cluster from another. In a further implementation, the clustering module 128 filters out short plaintiff claims or claims not meeting a predetermined threshold, such as but not limited to, 55 or more tokens are used.

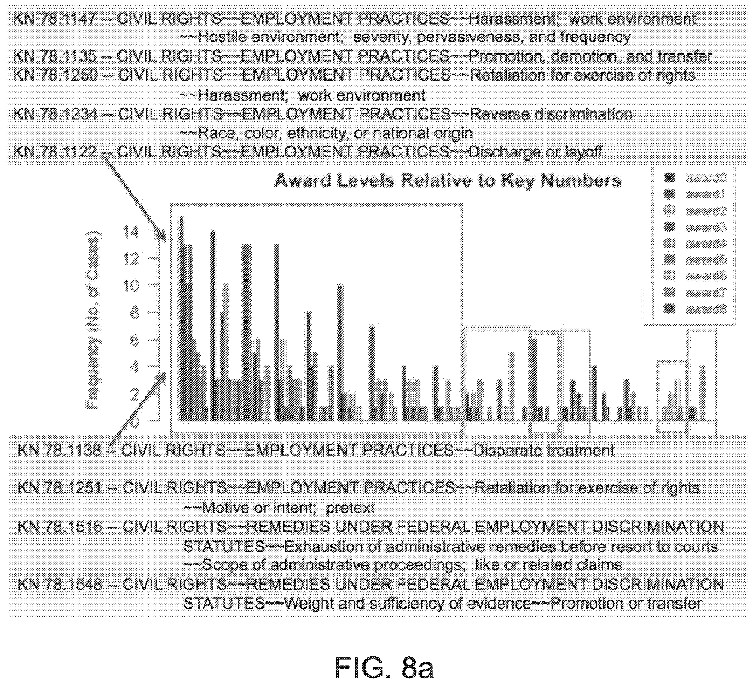

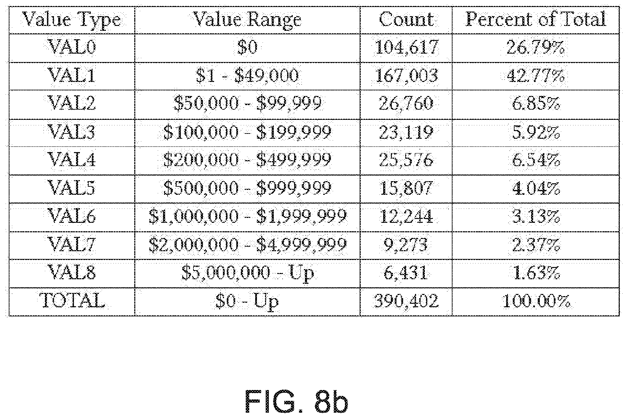

Once the cases have been clustered, the graphical rendering module 136 performs an Award Analysis 204d, which compiles the award distributions associated with each of cases and/or each of the cluster sets for presentation. In one implementation, an exemplary graphical display of the award distribution is illustrated in Fig. 8 wherein topically clustered cases are assigned the same key number are shown with the cluster's award distribution.

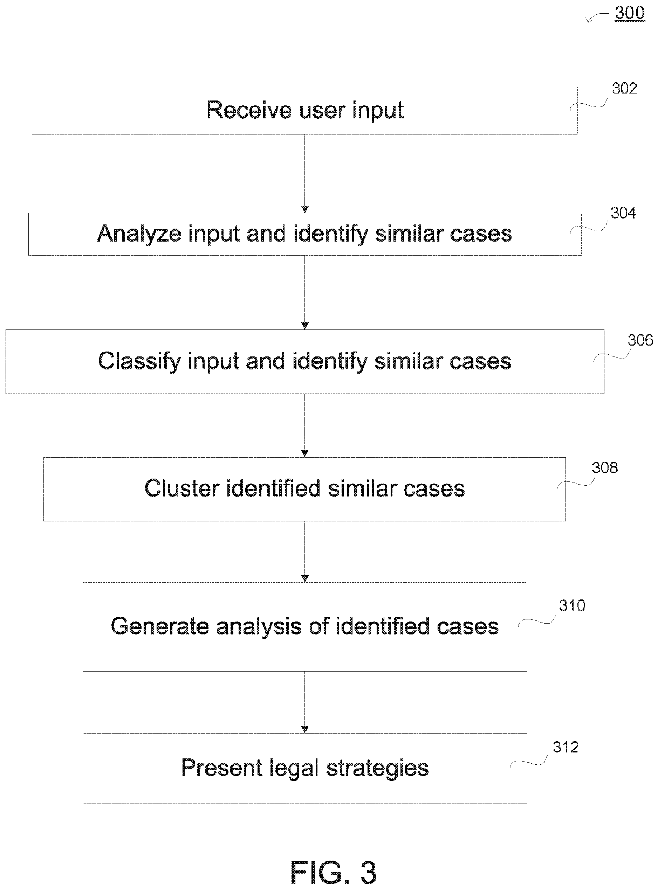

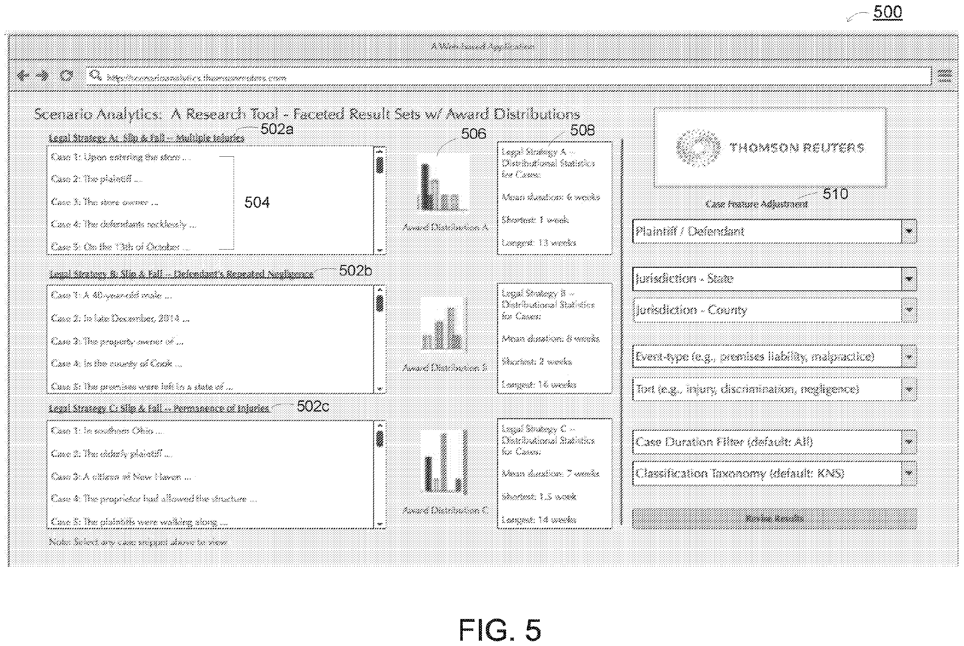

The time factorization module 134 performs a Trial Length Analysis 204e which determines and analyzes trial length of the cases in the Jury Verdict and Settlements data store 182. In one implementation, the time factorization module 134 may determine time related information such as length of the trial in a case, mean length of the trial for an identified strategy or cluster, or length of the trial for certain jurisdictions. In another implementation, the time factorization module 134 may also identify relations between trial length and outcome or trial length and award level, or relations between trial length and outcome accounting for court cost or other legal fees incurred. These evaluations may be incorporated into the generation of proposed legal strategies as discussed in Step 312 of Fig. 3. In an exemplary implementation, the information regarding trial duration may be presented to the user as illustrated by 508 in Fig. 5.

In a further implementation, the cases in the Jury Verdict and Settlements data store 182 may contain up to three court dates: (1) incident date; (2) filing date; (3) trial or settlement date. The time factorization module 134 may calculate the difference between filing date and trial or settlement date and use the difference for further analysis. In another implementation, the time factorization module 134 examines the difference value in relation to the state of the case. In yet another implementation, the time factorization module 134 examines the statistics for trial length and award level are evaluated, for example, trial length vs. award level for non-zero award levels, or trial length vs. award level for zero award levels.

The Negligence Analysis Module 132 performs Negligence Evaluation 204f which analyzes negligence in the cases in the Jury Verdict and Settlements data store 182. The Negligence Analysis Module 132 may evaluate the relationship of negligence, the jurisdiction or state underlying the cases and the award level. In one implementation, negligence by plaintiff or defendant may be evaluated as a factor in the verdict and/or award determination. In another implementation, the negligence treatment as dictated by a statute for a jurisdiction or state may be used in the negligence analysis. In another implementation, negligence models may be generated by the negligence analysis module 132. Exemplary models may be but are not limited to:

**Contributory Negligence System** - where plaintiff receives no award if found negligent even in part;

**Comparative Fault System** - where the award to the plaintiff is reduced by percentage the plaintiff is found negligent in the case, e.g., the plaintiff was found to be 25% negligent in the accident, so the award is reduced by this amount; and

**Modified Comparative Fault System** - where the plaintiff receives no award if plaintiff negligence is usually found to be 50% or greater.

The results of the negligence evaluation may also be incorporated into the generation of proposed legal strategies as discussed in Step 312 of Fig. 3.

Continuing onto step 206, the resulting analysis performed in relation to steps 204a - 204f are then saved into their corresponding data store. In one implementation, the analysis results may become part of the case summaries for their corresponding cases in the Jury Verdict and Settlements data store 182, or contribute to as an enriched case summary for an existing case summary. In a further implementation, the corresponding data stores may be part of data store 140 of the scenario analytics server 110, in particular the classification data store 146, segmentation data store 150, clustering data store 148, graphical data store 156, time factor data store 154, negligence data store 152, as illustrated in Fig. 1. In another implementation, the corresponding data stores (not shown) may be part of the Legal Data Store 180 or the Jury Verdict and Settlements data store 182 . In yet another implementation, the corresponding data stores (not shown) may be external to the scenario analytics server 110 and the legal data store 180.

Referring now to Fig. 3, an exemplary method 300 of generating prospective legal strategies is disclosed.

As shown in the Fig. 3, at step 302, data is provided by the user through user interface 174 of access device 170 and is received by the input module 122 and may be stored into user data store 142.

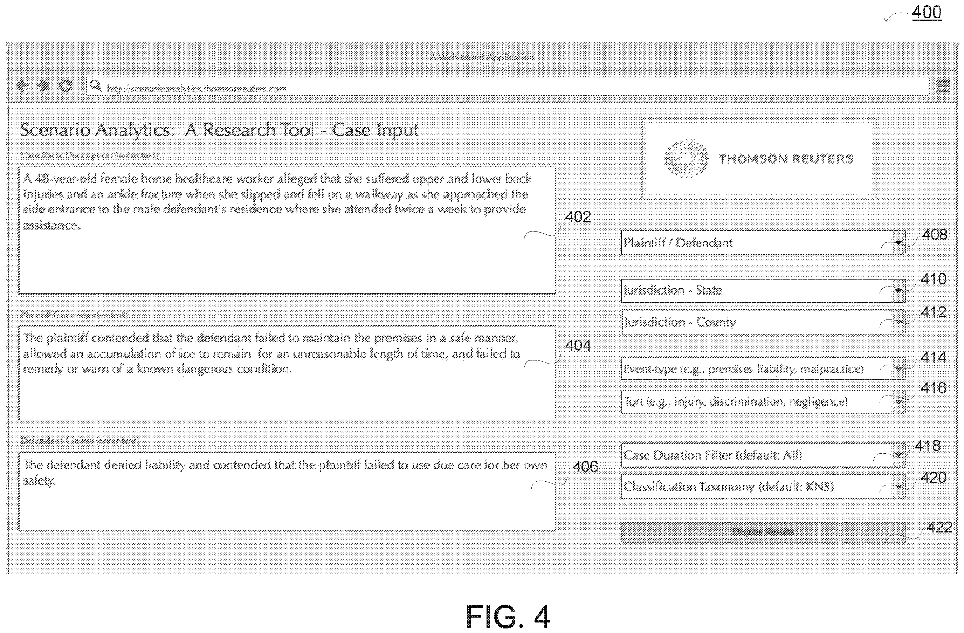

In one implementation, the data may be textual description of a case inputted by a user and may comprise but is not limited to a description of the facts of a case, plaintiff claims or defendant claims. The data provided by the user maybe a case record, comprising at least of the party of the plaintiff or a set of facts surrounding some form of legal topic, such as injury or tort action, or identified concepts and corresponding attributes, all of which is provided by the user (i.e., an attorney, paralegal or the like) through a user interface tool (i.e., litigation interface tool). In a further implementation, the user may also provide plaintiff claims or defendant claims that they want to explore using the litigation tool. An exemplary user interface is illustrated in Fig. 4, with separate fields for Case Facts Description 402, Plaintiff Claims 404 and/or Defendant Claims 406 for user input.

In a further implementation, the user may narrow the scope of the cases to be explored or used in a search by selecting from a series of options, which may in the form of, but not limited to, drop down menus as depicted by reference numbers 408-420. The series of options comprises at least the Plaintiff/Defendant, jurisdiction (State or Country), Event-type, Tort, Case Duration (i.e., focus on shorter vs. longer cases) or Classification Taxonomy (i.e., a different type of legal classification system besides the default Key Number System).

Referring back to Fig. 3, next at step 304, the analysis module 124 retrieves the user's data (i.e., the received case record) from the user data store 142 and processes the data. In one implementation, the received case record is analyzed in terms of its unstructured text representation or through sentence analysis and compared against cases in the jury verdicts and settlement data store 182 enriched by the analysis described in relation of steps 204-206 of Fig. 2 to determine similar cases. In another implementation, the received case record and its relation to the cases in the jury verdicts and settlement data store 182 may be identified through the entities present in the record, entities associated with a closed vocabulary, legal topics or identified concepts (i.e., events like accidents, resulting torts like injuries, or other litigation topics). The resulting analysis may be stored in analysis data store 144 by analysis module 124.

Continuing onto step 306, in one implementation, the classification module 126 may retrieve the user's data from the user data store 142 and classify the data using a classification engine such as like CARE™, in order to categorize the data according to a legal taxonomy such as the WEST KEY NUMBER SYSTEM®. The resulting classification may be compared with cases in the jury verdicts and settlement data store 182 that were analyzed or enriched by steps 204-206 of Fig. 2, to identify similar cases based on classification. The resulting classification and/or the identified similar cases may be stored in classification data store 146.

In another implementation, the resulting aforementioned analysis and classification may form part of a generated input summary. The input summary may comprise but are not limited to, a set of identified concepts and/or corresponding attributes of the input (i.e., categorized taxonomy).

Next at step 308, clustering module 128 may retrieve the analysis results from analysis data store 144 and/or the similar cases identified by classification from classification data store 146 and apply a clustering algorithm. The resulting clusters may be stored in clustering data store 148.

The clustering module 128 may utilize an algorithm or technology that recognizes common elements across the cases (i.e., the facts) but distinguish and/or group them into separate and distinct clusters based on the different variables. For example, the plaintiff's claims or defendant's claims or nature of the claims may be used as a variable for clustering. In another implementation, language patterns may be used as a variable for clustering. In yet another implementation, taxonomies, such as THE WEST KEY NUMBER SYSTEM™ may be used. Examplary clustering technology includes but is not limited to CLUTO, the NLTK toolkit, or even customized coding of these algorithms. Exemplary clustering algorithm includes but is not limited to k-means clustering, or partitional, agglomerative or graph-based clustering.

Continuing onto step 310, the clustering module 128 may utilize the resulting clusters from clustering data store 148 and determine its characteristic properties for each of the cases, clustered plaintiff claims and/or the overall cluster for extraction and analysis. Exemplary characteristic properties may be but are not limited to, language patterns including representative noun phrases, emphasized verbal expressions, repeated use of strong or severe language and other linguistic patterns that may be identified, measured and quantified by various forms of sentiment analysis, and also properties such as the mean length of time for each case to complete, the shortest and longest duration cases in the cluster or the graphically represented distribution of the awards for the cases, all of which have been determined in steps 204-206 of Fig. 2.

Finally, at step 312, in one implementation, the clustering module 128 compiles the resulting clusters from clustering data store 148 and the related characteristic properties to generate one or more strategies. The one or more strategies may be stored in the clustering module 128. In one exemplary implementation, a proposed set of strategies may be identified based on a litigation case type such as "Slip and Fall" and further divided by the type of injuries, such as "Multiple Injuries" "Defendant's Repeated Negligence" or "Permanence of Injuries". In another implementation, clustering module 128 may present the proposed strategies along with a listing of the cases that were part of the cluster that formed the strategy, a graphical rendering of the award distribution and/or relevant information regarding the distributional statistics for the cases (i.e., mean duration, shortest, or longest). An exemplary user interface with one or more proposed legal strategies presented is illustrated in Fig. 5.

In a further implementation, it may be defendant claims that are used to form the clusters, though the same types of language analyses described above may be harnessed. It is these essential characteristic properties that serve the user by illustrating the different outcomes associated with each cluster and the strategies that they represent. As such, they permit users to make more informed decisions about the legal strategy options they have at their disposal when formulating their arguments.

The user may also revise the resulting legal strategies by adjusting case parameters by selecting from the series of options as previously described in step 302.

The scenario analytics server 110 may utilize the prediction module 138 in a manner that is separate from the steps described above. The prediction module 138 may rely on a diverse set of features derived from the facts, the anticipated claims and the metadata associated with the candidate case. These features may include, for example, the type of litigation, the injury categories, the properties of the plaintiff or the defendant, the patterns of past settlements for the state county involved and similar. These feature sets may also include elements mined from the unstructured text of the fact and claims representations of a newly entered case. Given such a varied set of features, the system as illustrated in Fig. 1 or similar, can harness machine learning predictive analytic techniques such as naive Bayes, logistic regression, sequence modeling, support vector machines, random forests, boosting trees, neural networks, or other types of majority classifier or prediction modeling approaches to train computational models based on the particular features associated with the input variables. The prediction module 138 may output its assessment of a given case, in terms of predicted trial length (or range of trial length, with boundaries associated with a certain confidence interval), predicted award level (or range of award level, with boundaries associated with a certain confidence interval), or other form of trial outcome (or range of trial outcome, with boundaries associated with a certain confidence internal). In order to produce such predictive assessments, the system may internally evaluate its prospective performance, that is, its predictive capabilities, by utilizing many known outcomes for related cases present in the jury verdicts and settlements data store 182. Such a repository of known outcomes may be viewed as a gold data store. In one implementation, models developed for the system have relied upon tractable quantities of features, namely, on the order of O(100). It is this combination of state-of-the-art machine learning techniques and a very large repository of prior cases such as jury verdicts and settlements that allow the system to present users with quantitative insights into the likelihood of an instance case having certain outcome properties (or distributions thereof). As such, the system enables users to rely on principled predictions in order to assist in making informed decisions about the legal approaches and principles being used when formulating their arguments.

In yet another implementation, the prediction module 138 may generate prediction models by modeling the underlying data and may be associated with prediction scores.

Turning to Fig. 4, an exemplary graphical user interface (GUI) available through the user interface 174 of access device 170 is disclosed. In one implementation, the user interface 174 includes an application interface 400 with user input field Case Facts Description 402, Plaintiff Claims 404 and Defendant Claims 406, wherein the user may input information in one or more of the fields.

In a further implementation, application interface 400 may also include additional selections or options, but not limited to Plaintiff/Defendant 408; Jurisdiction - State 410; Jurisdiction - County 412; Event-type 414; Tort 416; Case Duration Filter 418 and Classification Taxonomy 420 to be used in the search.

Once all the data have been input and optional selections made, the users may select Display Results 422.

Continuing onto Fig. 5, an exemplary graphical user interface (GUI) available through the user interface 174 of access device 170 is disclosed. In one implementation, the user interface 174 includes an application interface 500 to present the results of the search. In one implementation, application interface 500 may include one or more sections, i.e., 502a -502c for displaying the proposed strategies based on different scenarios, as generated by prediction module 138 as described in step 312 of Fig. 3. A listing of related cases 504 is presented along with each of the proposed strategy. An award distribution illustration 506 and additional relevant statistics 508, such as but not limited to, the mean duration of a trial, shortest and longest trial length, may also be presented. In yet a further implementation, application interface 500 may include section 510 for case feature adjustment, which may be similar to the selections 408-420 available in Fig. 4 and are utilized to further revise the searching parameters.

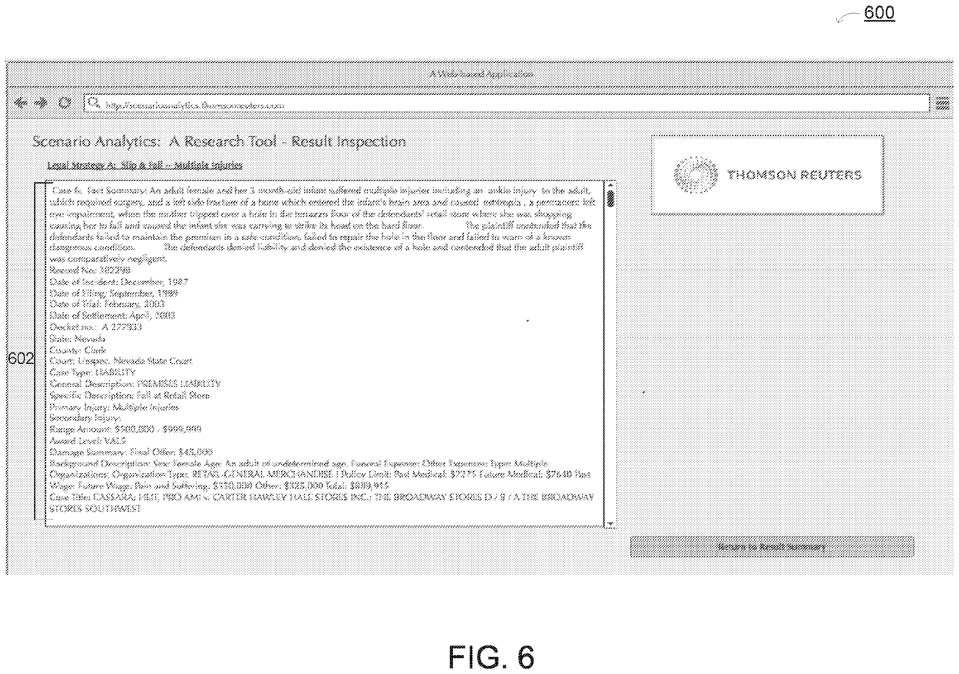

The application interface depicted in Fig. 6, illustrates exemplary details behind one of the cases in the legal strategy 502a proposed in Fig. 5. The details of the case 602 may include but are not limited to: the fact summary, the plaintiff and defendant contentions, the record number, date of incident, date of filing, date of trial, date of settlement, docket number, state, county, court, case type, general description, specific description, primary injury, secondary injury, range amount, award level, damage summary, background description and the like.

Fig. 7a illustrates an exemplary unstructured textual description in relation to the cases in the Jury Verdict and Settlements data store 182, which may be processed by segmentation module 130 and segmented into facts of the event 702, the plaintiffs' claims 704 and the defendants' claims 706.

Fig. 7b illustrates another exemplary unstructured textual description in relation to the cases in the Jury Verdict and Settlements data store 182, which may be processed by segmentation module 130 and segmented into facts of the event 702, the plaintiffs' claims 704, the defendants' claims 706 and other information 708.

Fig. 8a illustrates an exemplary award levels relative to key numbers as discussed in relation to Award Analysis 204d of Fig. 2. The exemplary award distributions are associated with clustered sets, in this instance, clustered by key numbers. The topics in this example come from Employment Discrimination cases. However, similar award distributions can be generated for different types of cases and types of clusters as well (i.e., clustering besides using key numbers).

In another implementation, Fig. 8b illustrates an exemplary award distribution by defined categories.

Figs. 1 through 8b are conceptual illustrations allowing for an explanation of the present disclosure. Various features of the system may be implemented in hardware, software, or a combination of hardware and software. For example, some features of the system may be implemented in one or more computer programs executing on programmable computer. Each program may be implemented in a high level procedural or object-oriented programming language to communicate with a computer system or other machine. Furthermore, each such computer program may be stored on a storage medium such as read-only-memory (ROM) readable by a general or special purpose programmable computer or processor, for configuring and operating the computer to perform the functions described above.

Notably, the figures and examples above are not meant to limit the scope of the present disclosure to a single implementation, as other implementations are possible by way of interchange of some or all of the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present specification, an implementation showing a singular component should not necessarily be limited to other implementations including a plurality of the same component, and vice-versa, unless explicitly stated otherwise herein. Moreover, applicants do not intend for any term in the specification or claims to be ascribed an uncommon or special meaning unless explicitly set forth as such.

**Claims**

1. A system (100) for evaluating scenarios to generate one or more legal strategies comprising:

   a legal data store (180) comprising a set of cases and corresponding case summaries (182);
   a scenario analytics server (110) including a processor (112) and memory (120) storing instructions that, in response to receiving an input from at least one data source, cause the processor (112) to:

   apply a set of process modules (124-134, 136) to the input to generate an input summary, the input summary comprising a set of identified concepts and corresponding attributes of the input, the input comprising background facts;
   select one or more cases from the legal data store (180) based in part on the case summaries and input summary;
   cluster cases by a clustering module (128) to form one or more sets of clustered cases to extract a set of characteristic properties, the clustering module (128) applies a k-means clustering algorithm to partition n data objects or documents into k clusters in which each data object or document belongs to the cluster with the nearest mean or center point;
   analyze the one or more selected cases from the legal data store (180) based on the extracted set of characteristic properties; and
   generate one or more legal strategies using the analysis of the one or more selected cases.

2. The system of claim 1, wherein the input further comprises at least one of plaintiff claims or defendant claims.

3. The system of claim 1, wherein one of the set of process modules (124-134, 136) parses the input.

4. The system of claim 1, wherein one of the set of process modules (124-134, 138) classifies the input into a predefined taxonomy.

5. The system of claim 1, wherein a set of characteristic properties are extracted for each of the cases in the one or more sets of clustered cases.

6. The system of claim 1, wherein the set of characteristic properties comprises at least one of noun phrases, mean length of time for each case to complete, the shortest or longest duration case and awards.

7. The system of claim 1, wherein the legal data store (180) comprises a jury verdict and settlements data store (182).

8. The system of claim 1, wherein the set of cases of the legal data store (180) are segmented by at least one of background facts, plaintiff claims or defendant claims.

9. The system of claim 1 further comprising a negligence module (132) that performs negligence analysis on the set of cases of the legal data store (180).

10. The system of claim 9, wherein negligence analysis weights a verdict against a plaintiff or a defendant and determines negligence based on negligence by the plaintiff or the defendant.

11. The system of claim 1 further comprising a time factorization module (134) that performs temporal analysis on the set of cases of the legal data store (180).

12. The system of claim 11, wherein temporal analysis identifies the jurisdiction of a case or mean duration of a case.

13. The system of claim 1, wherein the scenario analytics server (110) is configured to present the one or more legal strategies on a graphical user interface (174).

14. A computer-implemented method for evaluating scenarios to generate one or more legal strategies comprising:

> receiving an input from at least one data source, the input comprising background facts;
> applying a set of process modules (124-134, 138) to the input to generate an input

summary, the input summary comprising a set of identified concepts and corresponding attributes of the input;

> selecting one or more cases from a legal data store (180) based in part on the input summary;
> clustering cases by a clustering module (128) to form one or more sets of clustered cases to extract a set of characteristic properties, wherein the clustering module (128) applies a k-means clustering algorithm to partition n data objects or documents into k clusters in which each data object or document belongs to the cluster with the nearest mean or center point;
> analyzing the one or more selected cases from the legal data store based on the extracted set of characteristic properties; and
> generating one or more legal strategies using the analysis of the one or more selected cases.

**Patentansprüche**

1. System (100) zur Evaluierung von Szenarien, um eine oder mehrere Rechtsstrategien zu erzeugen, umfassend:

> einem Rechtsdatenspeicher (180), der einen Satz von Fällen und entsprechenden Fallzusammenfassungen (182) umfasst;
> einem Szenario-Analytik-Server (110) mit einem Prozessor (112) und einem Speicher (120), der Anweisungen speichert, welche in Reaktion auf ein Empfangen einer Eingabe von mindestens einer Datenquelle, den Prozessor (112) dazu veranlasst:

>> Anwenden eines Satzes von Prozessmodulen (124-134, 136) auf die Eingabe, um eine Eingabezusammenfassung zu erzeugen, wobei die Eingabezusammenfassung einen Satz von identifizierten Konzepten und entsprechenden Attributen der Eingabe umfasst, wobei die Eingabe Hintergrundfakten umfasst;
>> Auswählen eines oder mehrerer Fälle aus dem Rechtsdatenspeicher (180), teilweise basierend auf den Fallzusammenfassungen und der Eingabezusammenfassung;
>> Clustern von Fällen durch ein Clustermodul (128), um einen oder mehrere Sätze von geclusterten Fällen zu bilden, um einen Satz von charakteristischen Eigenschaften zu extrahieren, wobei das Clustermodul (128) einen k-Means-Clustering-Algorithmus anwendet, um n Datenobjekte oder Dokumente in k Cluster zu unterteilen, wobei jedes Datenobjekt oder Dokument zu dem Cluster mit dem nächstgelegenen Mittelwert oder Mittelpunkt gehört;
>> Analysieren des einen oder der mehreren ausgewählten Fälle aus dem Rechtsdatenspeicher (180), basierend auf dem extrahierten Satz von charakteristischen Eigenschaften; und
>> Erzeugen einer oder mehrerer Rechtsstrategien unter Verwendung der Analyse des einen oder der mehreren ausgewählten Fälle.

2. System nach Anspruch 1, wobei die Eingabe ferner mindestens eines der Klägeransprüche oder Beklagtenansprüche umfasst.

3. System nach Anspruch 1, wobei einer der Sätze von Prozessmodulen (124-134, 136) die Eingabe parst.

4. System nach Anspruch 1, wobei einer der Sätze von Prozessmodulen (124-134, 136) die Eingabe in eine vordefinierte Taxonomie klassifiziert.

5. System nach Anspruch 1, wobei ein Satz charakteristischer Eigenschaften für jeden der Fälle in dem einen oder der mehreren Sätze von geclusterten Fällen extrahiert wird.

6. System nach Anspruch 1, wobei ein Satz charakteristischer Eigenschaften mindestens eines von Substantivphrasen, durchschnittliche Zeitdauer für jeden Fall bis zum Abschluss, dem kürzesten oder längsten Fall und Auszeichnungen umfasst.

7. System nach Anspruch 1, wobei der Rechtsdatenspeicher (180) einen Geschworenen-Urteils- und Beilegungsdatenspeicher (182) umfasst.

8. System nach Anspruch 1, wobei der Satz von Fällen des Rechtsdatenspeichers (180) durch mindestens eines von Hintergrundfakten, Klägeransprüche oder Beklagtenansprüche segmentiert ist.

9. System nach Anspruch 1 ferner umfassend ein Fahrlässigkeitsmodul (132), das eine Fahrlässigkeitsanalyse für den Satz von Fällen des Rechtsdatenspeichers (180) durchführt.

10. System nach Anspruch 9, wobei die Fahrlässigkeitsanalyse ein Urteil gegen einen Kläger oder einen Beklagten gewichtet und die Fahrlässigkeit auf der Grundlage der Fahrlässigkeit des Klägers oder des Beklagten ermittelt.

11. System nach Anspruch 1 ferner umfassend ein Zeitfaktorisierungsmodul (134), das eine zeitliche Analyse des Satzes von Fällen des Rechtsdatenspeichers (180) durchführt.

12. System nach Anspruch 11 , wobei die zeitliche Analyse die Zuständigkeit eines Falles oder die durchschnittliche Dauer eines Falles identifiziert.

13. System nach Anspruch 1, wobei der Szenario-Analytik-Server (110) dazu konfiguriert ist, die eine oder mehrere Rechtsstrategien auf einer grafischen Benutzerschnittstelle (174) darzustellen.

14. Computer-implementiertes Verfahren zur Evaluierung von Szenarien, um eine oder mehrere Rechtsstrategien zu erzeugen, umfassend:

Empfangen einer Eingabe von mindestens einer Datenquelle, wobei die Eingabe Hintergrundfakten umfasst;
Anwenden eines Satzes von Prozessmodulen (124-134, 138) auf die Eingabe, um eine Eingabezusammenfassung zu erzeugen, wobei die Eingabezusammenfassung einen Satz von identifizierten Konzepten und entsprechenden Attributen der Eingabe umfasst;
Auswählen eines oder mehrerer Fälle aus einem Rechtsdatenspeicher (180), teilweise basierend auf der Eingabezusammenfassung;
Clustern von Fällen durch ein Clustermodul (128), um einen oder mehrere Sätze von geclusterten Fällen zu bilden, um einen Satz von charakteristischen Eigenschaften zu extrahieren, wobei das Clustermodul (128) einen k-Means-Clustering-Algorithmus anwendet, um n Datenobjekte oder Dokumente in k Cluster zu unterteilen, in denen jedes Datenobjekt oder Dokument zu dem Cluster mit dem nächstgelegenen Mittelwert oder Mittelpunkt gehört;
Analysieren des einen oder der mehreren ausgewählten Fälle aus dem Rechtsdatenspeicher auf der Grundlage des extrahierten Satzes von charakteristischen Eigenschaften; und
Erzeugen einer oder mehrerer Rechtsstrategien unter Verwendung der Analyse des einen oder der mehreren ausgewählten Fälle.

**Revendications**

1. Système (100) d'évaluation de scénarios destiné à générer une ou plusieurs stratégies juridiques comprenant :

un magasin de données juridiques (180) comprenant un ensemble de cas et des résumés de cas correspondants (182) ;

un serveur d'analyse de scénario (110) comportant un processeur (112) et une mémoire (120) stockant des instructions qui, en réponse à la réception d'une entrée provenant d'au moins une source de données, amènent le processeur (112) à :

appliquer un ensemble de modules de processus (124-134, 136) à l'entrée pour générer un résumé d'entrée, le résumé d'entrée comprenant un ensemble de concepts identifiés et des attributs correspondants de l'entrée, l'entrée comprenant des faits sur le contexte ;

sélectionner un ou plusieurs cas à partir du magasin de données juridiques (180) en partie sur la base des résumés de cas et du résumé d'entrée ;

regrouper des cas par un module de regroupement (128) pour former un ou plusieurs ensembles de cas regroupés pour extraire un ensemble de propriétés caractéristiques, le module de regroupement (128) applique un algorithme de regroupement des k-moyennes pour partitionner n objets de données ou des documents en k groupes dans lesquels chaque objet de données ou document appartient au groupe avec le point moyen ou central le plus proche ;

analyser le ou les cas sélectionnés à partir du magasin de données juridiques (180) sur la base de l'ensemble de propriétés caractéristiques extrait ; et

générer une ou plusieurs stratégies juridiques à l'aide de l'analyse du ou des cas sélectionnés.

2. Système selon la revendication 1, dans lequel l'entrée comprend en outre au moins l'une parmi des réclamations du plaignant ou des réclamations de l'accusé.

3. Système selon la revendication 1, dans lequel l'un de l'ensemble de modules de processus (124-134, 136) analyse l'entrée.

4. Système selon la revendication 1, dans lequel l'un de l'ensemble de modules de processus (124 à 134, 138) classe l'entrée dans une taxonomie prédéfinie.

5. Système selon la revendication 1, dans lequel un ensemble de propriétés caractéristiques est extrait pour chacun des cas dans le ou les ensembles de cas regroupés.

6. Système selon la revendication 1, dans lequel l'ensemble de propriétés caractéristiques comprend au moins l'un parmi des groupes nominaux, une durée moyenne nécessaire pour conclure chaque cas, le cas à la durée la plus courte ou la plus longue et les sentences.

7. Système selon la revendication 1, dans lequel le magasin de données juridiques (180) comprend un magasin de données pour les verdicts du jury et les règlements (182).

8. Système selon la revendication 1, dans lequel l'ensemble des cas du magasin de données juridiques (180) sont segmentés par au moins l'un parmi des faits sur le contexte, des réclamations du plaignant ou des réclamations de l'accusé.

9. Système selon la revendication 1, comprenant en outre un module de négligence (132) qui effectue une analyse de négligence sur l'ensemble des cas du magasin de données juridiques (180).

10. Système selon la revendication 9, dans lequel l'analyse de négligence attribue un verdict contre un plaignant ou un accusé et détermine d'une négligence sur la base d'une négligence par le plaignant ou l'accusé.

11. Système selon la revendication 1, comprenant en outre un module de factorisation de temps (134) qui effectue une analyse temporelle sur l'ensemble des cas du magasin de données juridiques (180).

12. Système selon la revendication 11, dans lequel l'analyse temporelle identifie la juridiction d'un cas ou d'une durée moyenne d'un cas.

13. Système selon la revendication 1, dans lequel le serveur d'analyse de scénario (110) est configuré pour présenter la ou les stratégies juridiques sur une interface utilisateur graphique (174).

14. Procédé mis en oeuvre par ordinateur pour évaluer des scénarios pour générer une ou plusieurs stratégies juridiques comprenant :

la réception d'une entrée provenant d'au moins une source de données, l'entrée comprenant des données sur le contexte ;

l'application d'un ensemble de modules de processus (124-134, 138) à l'entrée pour générer un résumé d'entrée, le résumé d'entrée comprenant un ensemble de concepts identifiés et des attributs correspondants de l'entrée ;

la sélection d'un ou plusieurs cas à partir d'un magasin de données juridiques (180) en fonction en partie du résumé d'entrée ;

le regroupement des cas par un module de regroupement (128) pour former un ou plusieurs ensembles de cas regroupés pour extraire un ensemble de propriétés caractéristiques, le module de regroupement (128) appliquant un algorithme de regroupement des k-moyennes pour partitionner n objets de données ou des documents en k groupes dans lesquels chaque objet de données ou document appartient au groupe avec le point moyen ou central le plus proche ;

l'analyse du ou des cas sélectionnés à partir du magasin de données juridiques sur la base de l'ensemble de propriétés caractéristiques extrait ; et

le fait de générer une ou plusieurs stratégies juridiques à l'aide de l'analyse du ou des cas sélectionnés.

# SCENARIO ANALYTICS SERVER 110

~ 100

| PROCESSOR 112 | RANDOM ACCESS MEMORY 114 | INPUT/ OUTPUT 116 |

111

## NON-VOLATILE MEMORY 120

| Input Module 122 | Analysis module 124 | Classification module 126 | Clustering module 128 | Prediction Module 138 |

| Segmentation Module 130 | Negligence Analysis Module 132 | Time Factorization Module 134 | Graphical Rendering Module 136 |

## DATA STORE 140

| user data store 142 | analysis data store 144 | classification data store 146 | clustering data store 148 |

| segmentation data store 150 | negligence data store 152 | time factor data store 154 | graphical data store 156 | prediction data store 158 |

# Legal Data Store 180

| Jury Verdict and Settlements data store 182 |

NETWORK 160

Access Device 170

| user interface 174 |

FIG. 1

EP 3 417 409 B1

200

202 Obtain cases from Jury Verdict and Settlements data store

204 Analyze cases

204a Topic Classification Analysis

204b Case Segmentation Analysis

204c Clustering Analysis

204d Award Analysis

204e Trial Length Analysis

204f Negligence Evaluation Analysis

206 Analysis saved to corresponding data store

FIG. 2

_300_

Receive user input — 302

Analyze input and identify similar cases — 304

Classify input and identify similar cases — 306

Cluster identified similar cases — 308

Generate analysis of identified cases — 310

Present legal strategies — 312

FIG. 3

FIG. 4

FIG. 5

EP 3 417 409 B1

600

Scenario Analytics: A Research Tool - Result Inspection

Legal Strategy A: Slip & Fall – Multiple Injuries

Case 6: Fact Summary: An adult female and her 3-month-old infant suffered multiple injuries including an ankle injury to the adult, which required surgery, and a left side fracture of a bone which entered the infant's brain area and caused contusions, a permanent left eye impairment, when the mother tripped over a hole in the terrazzo floor of the defendants' retail store where she was shopping, causing her to fall and caused the infant she was carrying to strike its head on the hard floor. The plaintiff contended that the defendants failed to maintain the premises in a safe condition, failed to repair the hole in the floor and failed to warn of a known dangerous condition. The defendants denied liability and denied the existence of a hole and contended that the adult plaintiff was comparatively negligent.
Record No: 302298
Date of Incident: December, 1987
Date of Filing: September, 1989
Date of Trial: February, 2003
Date of Settlement: April, 2003
Docket no.: A 277933
State: Nevada
County: Clark
Court: Unspec. Nevada State Court
Case Type: LIABILITY
General Description: PREMISES LIABILITY
Specific Description: Fall at Retail Store
Primary Injury: Multiple Injuries
Secondary Injury:
Range Amount: $500,000 – $999,000
Award Level: VAL5
Damage Summary: Final Offer: $45,000
Background Description: Sex: Female Age: An adult of undetermined age. Funeral Expenses: Other Expenses: Type: Multiple Organizations: Organization Type: RETAIL-GENERAL MERCHANDISE | Policy Limit: Past Medical: $7375 Future Medical: $7640 Past Wage: Future Wage: Pain and Suffering: $150,000 Other: $325,000 Total: $389,965
Case Title: CASSARA; HEIDI, PRO AMI v. CARTER HAWLEY HALE STORES INC.; THE BROADWAY STORES D / B / A THE BROADWAY STORES SOUTHWEST

602

THOMSON REUTERS

FIG. 6

A 73-year-old male retired pathologist suffered a mild [stroke], which resulted in seizures and a permanent loss of memory, and emotional distress when he presented to the male defendant doctor and co-defendant radiologist, who was a member of the third-named defendant medical group. The plaintiff contended that the defendant failed to properly diagnose his condition, performed an unnecessary procedure based on the incorrect diagnosis of subdural hygomas and failed to terminate the drainage treatments being administered when he discovered that only clear fluid was present. The plaintiff further contended that the defendant and co-defendant both failed to properly evaluate the results of an MRI and failed to provide the standard of care. The defendants denied liability and contended that the MRI films indicated that there were subdural hygomas which were reduced by the drainage treatments and that the standard of care dictated that the drainage be performed to relieve the atrophy.

FIG. 7a

A newborn infant was born with spastic quadriplegia, cerebral palsy, and a reduced IQ when the defendant obstetrician failed to act in a timely manner and perform an emergency cesarean section when the plaintiff mother presented herself with severe abdominal pains in the fifth month of pregnancy. According to testimony and hospital records, the plaintiff mother presented herself to the defendant on a Saturday morning with abdominal pain and vomiting. The defendant performed an external exam and sent the plaintiff mother home with a prescription of codeine and Tylenol. By the early hours of Sunday morning, the plaintiff mother was still suffering unbearable pain and called the defendant at about 4:00 a.m. The defendant advised the plaintiff mother to go to the hospital and advised hospital personnel to check the mother for signs of infection. Hospital personnel applied a fetal head monitor to the unborn infant around 8:00 a.m. when nurses began to suspect a preterm labor. According to the plaintiff's expert witnesses, a record of the infant's heart rate profile presented at trial indicated extreme fetal distress due to a lack of oxygen. The defendant was not present at the hospital and instructed the first-year resident on the labor floor to administer the labor inhibitor Yutopar. The defendant arrived at the hospital at 11:00 a.m., and when the Yutopar failed to stop the labor, the defendant decided to rupture the fetal membranes and continue with the birth. Upon rupturing the membrane however, an extreme amount of blood was expelled, prompting the defendant to perform an emergency cesarean section. The plaintiff contended, however, that by that time, the infant had already suffered severe hypoxia. The plaintiff's counsel produced a series of expert witnesses, who testified that the defendant fell below the standard level of care when he failed to monitor the infant when the mother first presented herself on Saturday. The plaintiff's perinatologist testified that the infant had been in distress for at least nine and one-half hours prior to birth and that immediate action should have been taken when the heart rate monitor was first applied at 8:00 a.m. on Sunday. The defendant testified that his overall care fell within the standard of care and that he justifiably assumed that the plaintiff was suffering from round ligament syndrome when she first presented herself. The defendant called medical witnesses who testified that the infant's heart rate profile did not indicate fetal distress. The defendant contended that it was his duty to try to prevent labor since the infant would have had to have been delivered in the early premature stage and would have been at risk for birth defects anyway. The defendant's insurance carrier settled after the verdict for $4,500,000 despite carrying a $3,000,000 policy for the defendant, as the defendant had filed a bad faith claim against the insurer for failing to make a reasonable pretrial offer.

FIG. 7b

KN 78.1147 — CIVIL RIGHTS—EMPLOYMENT PRACTICES—Harassment; work environment
—Hostile environment; severity, pervasiveness, and frequency
KN 78.1135 — CIVIL RIGHTS—EMPLOYMENT PRACTICES—Promotion, demotion, and transfer
KN 78.1250 — CIVIL RIGHTS—EMPLOYMENT PRACTICES—Retaliation for exercise of rights
—Harassment; work environment
KN 78.1234 — CIVIL RIGHTS—EMPLOYMENT PRACTICES—Reverse discrimination
—Race, color, ethnicity, or national origin
KN 78.1122 — CIVIL RIGHTS—EMPLOYMENT PRACTICES—Discharge or layoff

**Award Levels Relative to Key Numbers**

KN 78.1138 — CIVIL RIGHTS—EMPLOYMENT PRACTICES—Disparate treatment

KN 78.1251 — CIVIL RIGHTS—EMPLOYMENT PRACTICES—Retaliation for exercise of rights
—Motive or intent; pretext
KN 78.1516 — CIVIL RIGHTS—REMEDIES UNDER FEDERAL EMPLOYMENT DISCRIMINATION
STATUTES—Exhaustion of administrative remedies before resort to courts
—Scope of administrative proceedings; like or related claims
KN 78.1548 — CIVIL RIGHTS—REMEDIES UNDER FEDERAL EMPLOYMENT DISCRIMINATION
STATUTES—Weight and sufficiency of evidence—Promotion or transfer

FIG. 8a

| Value Type | Value Range | Count | Percent of Total |
|------------|-------------|-------|------------------|
| VAL0 | $0 | 104,617 | 26.79% |
| VAL1 | $1 - $49,000 | 167,003 | 42.77% |
| VAL2 | $50,000 - $99,999 | 26,760 | 6.85% |
| VAL3 | $100,000 - $199,999 | 23,119 | 5.92% |
| VAL4 | $200,000 - $499,999 | 25,576 | 6.54% |
| VAL5 | $500,000 - $999,999 | 15,807 | 4.04% |
| VAL6 | $1,000,000 - $1,999,999 | 12,244 | 3.13% |
| VAL7 | $2,000,000 - $4,999,999 | 9,273 | 2.37% |
| VAL8 | $5,000,000 - Up | 6,431 | 1.63% |
| TOTAL | $0 - Up | 390,402 | 100.00% |

# FIG. 8b

**EP 3 417 409 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62350754
- US 2009076836 A1
- US 7062498 B
- US 7580939 B